# EUROPEAN PATENT SPECIFICATION

(11) **EP 1 677 939 B1**
(45) Date of publication and mention of the grant of the patent: **08.12.2010**
(21) Application number: 03769632.5
(22) Date of filing: 21.10.2003
(51) Int. Cl.: B23K 9/04

(54) **MANUFACTURE OF THIN HARDFACED PLATES**
HERSTELLUNG DÜNNER OBERFLÄCHENGEHÄRTETER PLATTEN
FABRICATION DE PLAQUES MINCES A REVETEMENT DUR

(43) Date of publication of application: 12.07.2006
(73) Proprietor: Welding Alloys Limited, Fowlmere Near Royston Hertfordshire SG8 7QS (GB)
(72) Inventor: SCANDELLA, Jean-Louis, F-68320 Holtzwihr (FR); SIMPSON, Michael, Paul, Ely, Cambridgeshire CB7 5TN (GB); WHITMORE, Leslie, Buntingford, Hertfordshire SG9 9DP (GB)
(74) Representative: Hirsz, Christopher Stanislaw
(86) International application number: PCT/GB2003/004562
(87) International publication number: WO 2005/044500

(56) References cited:
- WO-A-92/18283
- US-A- 2 427 350
- US-A- 3 075 067

## Description

This invention relates to the manufacture of hardfaced plates which comprise a metallic substrate clad on at least one major surface thereof, by arc welding, with a hard wearing, oxidation- and/or corrosion-resistant material, such as a steel, low-alloy ferrous material, iron or a high-alloy ferrous material, cobalt-based alloy, nickel-based alloy or a copper-based alloy.

Hardfaced plates are used in harsh and demanding working environments where resistance to abrasion, adhesion, erosion, cavitation, oxidation and/or other corrosion is important. Typical manufacturing techniques for these plates involve a cladding operation by arc welding to the surface(s) of a comparatively inexpensive and less durable substrate, usually in sheet or plate form which, after cladding, can be either cut to size and/or shaped to required dimensions for the manufacture of various products such as tubes, elbows and the like.

The process by which these hardfaced plates are manufactured, involves welding in which an arc is established between a continuously-fed solid or tubular welding wire and the associated weld pool on the substrate or the substrate itself, for example, an open-arc welding process. If necessary, an inert gas can be used to shield the weld pool, for example, a Mig/Mag welding process. Also, tubular welding wires, with or without flux contained in the core, can be used, depending upon manufacturing and/or operating requirements and conditions.

The arc welding process is a function of several parameters, such as, the welding current, arc voltage, relative speed between the welding gun and substrate, the angle between the gun and the substrate and the distance between the tip of the welding gun and the substrate, sometimes known as the "stickout distance".

To be able to produce hardfaced plates by arc welding, the ability to monitor and control at least one and preferably at least some of these welding parameters is critical, particularly when thin hardfaced plates are required.

Hardfaced plates of 5mm thickness and above are well known.

In certain circumstances, however, particularly where weight is important, plates with thicknesses of less than, say, 5mm are required. The difficulty in reducing the thickness of the plates is associated with the dilution of the welding and substrate metals during the arc welding process, due to high heat input which tends to burn through the substrate. Wear resistant plates less than 5mm in thickness are available in cast form but they offer limited durability and hence short working life, due mainly to their low alloy content.

Since there is no proven method for manufacturing thin hardfaced plates of less than 5mm in thickness by arc welding, the techniques of a) producing thick hardfaced plates and machining off the excess cladding material after manufacture of b) producing by powder spraying or plasma welding, are very expensive and impractical.

WO92/18283 (Browne et al) discloses an apparatus for applying weld metal to metal plates. According to WO92/18283 an advantage of a flat plate system is that long lengths of plate may be hard faced.

It is an object of the present invention to provide an improved method for manufacturing hardfaced plates with thicknesses of less than 5mm.

It is another object of the invention to provide a method of manufacturing thin hardfaced plates which are capable of being deformed into different shapes without the substrate cracking or breaking and without the cladding material peeling off or otherwise separating from the substrate.

Accordingly, a first aspect of the present invention comprises a method of manufacturing a hardfaced plate according to claim 1.

Preferred embodiments are disclosed in the dependent claims.

In order that the invention may be more fully understood, a preferred method of manufacturing, and associated apparatus, in accordance therewith will now be described by way of example and with reference to the accompanying drawings in which:
Figure 1 is a sectional view of a portion of a thin hardfaced plate;
Figure 2 is a diagrammatic view of a prior art apparatus for cladding a substrate by arc welding;
Figure 3 is a side elevation of apparatus for manufacturing the thin hardfaced plate shown in Figure 1;
Figure 4 is a front elevation of the apparatus shown in Figure 3; and
Figure 5 is a plan of the apparatus shown in Figures 3 and 4.

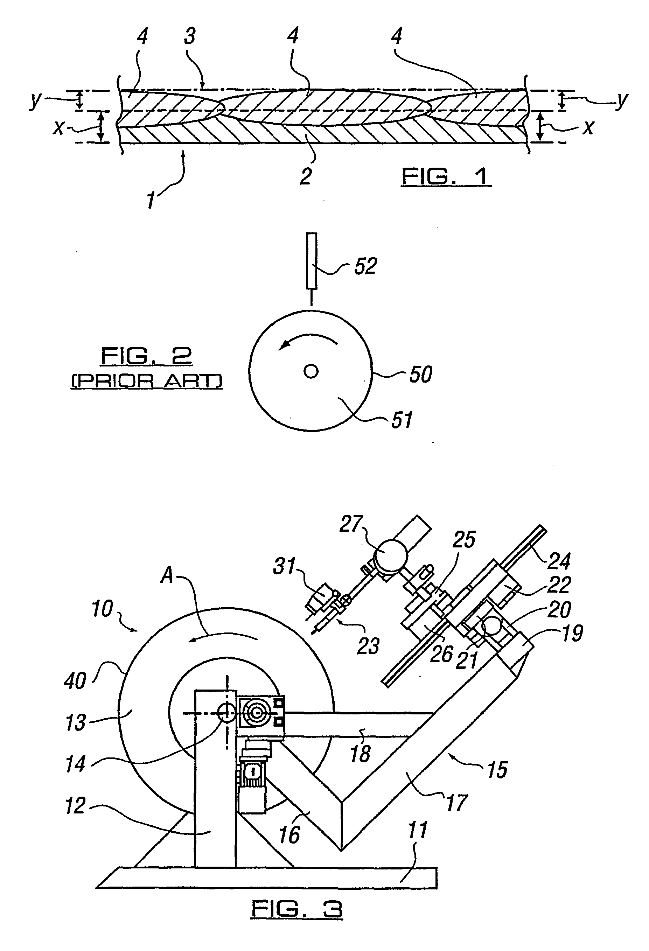

Referring firstly to Figure 1 of the accompanying drawings, a thin hardfaced plate, indicated generally at 1, has been manufactured in accordance with the invention and comprises a metallic substrate 2 of a suitable metallic material, such as a steel.

A cladding, indicated generally at 3, has been applied to the upper surface of the substrate 2, that cladding 3 being in the form of arc welded beads 4 of any suitable metallic material, such as a steel, low--alloy ferrous material, iron or a high-alloy ferrous-material or a cobalt-, nickel- or copper-based alloy.

The thickness of the metallic substrate 2 before cladding is represented by the distance x which is preferably no more than 4mm, whilst the thickness of the cladding 3 is represented by the distance y which excludes the depth of penetration of the cladding beads 4 into the upper surface of the substrate 2.

The thickness y is preferably no greater than 2mm.

A thin hardfaced plate 1 having a thickness x + y totalling, say, 5mm, where x is 3mm and y is 2mm, is known as a "3 + 2 plate".

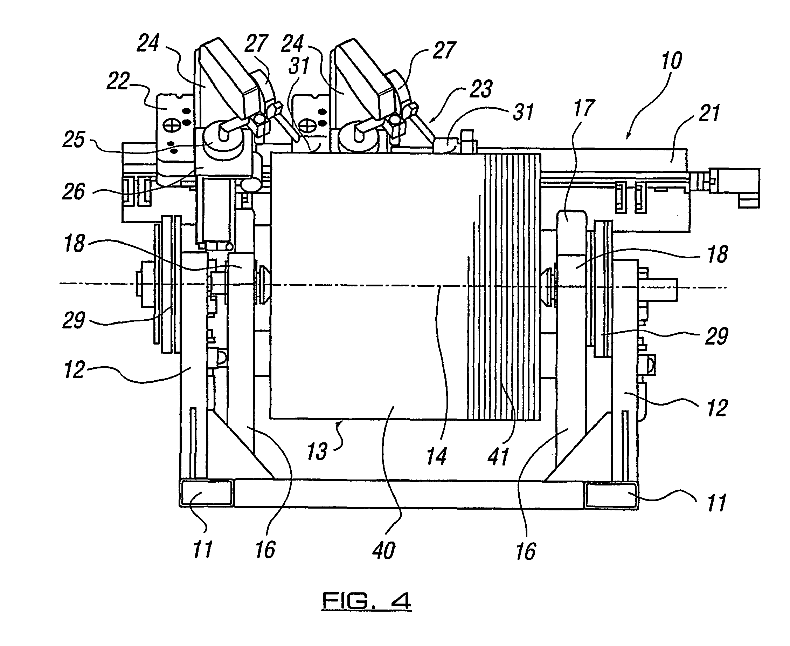

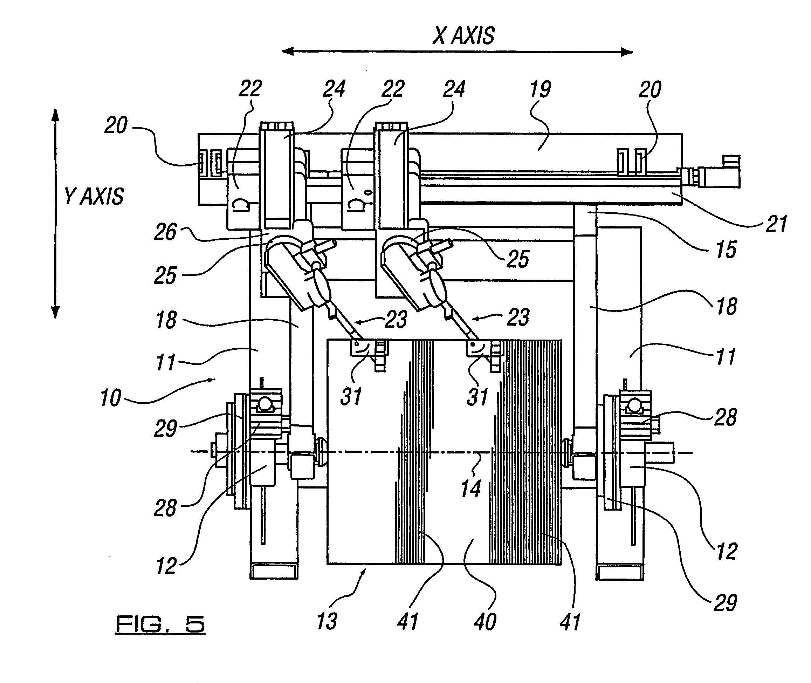

Referring now to Figures 3 to 5 of the accompanying drawings, an apparatus for manufacturing a thin hardfaced plate, such as that shown at 1 in Figure 1, is indicated generally at 10 and comprises a rigid base 11 upon which is mounted, via a pair of spaced uprights 12, a drum 13 which is rotatable about a horizontal axis 14, in the anticlockwise direction of arrow A, upon bearings (not shown) provided in respective uprights 12.

A tiltable frame, indicated generally at 15, comprises spaced pairs of arms 16, 17 on respective opposed sides of the base 11, connected together at their lower ends and, also, by a stay member 18.

The upper left hand end of the arm 16 is mounted to the axis 14 for pivotal movement with respect thereto, so that the frame 15, and components mounted thereon, can be tilted up and down.

The upper ends of the pair of arms 17 of the frame 15 are connected together by a cross member 19 upon which is mounted spacers 20 and on to these is mounted a beam 21 which defines the X axis of the apparatus 10.

A carriage 22 is mounted slidably or racked upon the beam 21 for moving its corresponding welding gun 23 in the X axis direction and a guide beam 24 is mounted on the carriage 22 to provide movement towards and away from the drum 13, which defines the Y-axis of the apparatus 10.

Movably mounted upon each guide beam 24 is an arc welding gun, indicated generally at 23, with adjustable movement of each welding gun 23 along its guide beam 24 parallel to the Y axis of the apparatus.

Also, each welding gun 23 is mounted pivotally at 25 to a mounting 26 movable linearly along its corresponding guide beam 24 in the Y axis direction and extends at an acute angle to the surface of a substrate 40 mounted to the drum 13, for delivering welding wire 30 to the substrate surface.

Each welding gun 23 is mounted adjustably at 26 for linear movement towards and away from the drum 13 and, also, at 25 for pivotal movement. Such adjustments may be carried out manually at set-up.

Attached to each welding gun 23 is a sensor 31 for monitoring, by thickness, the profile of cladding applied by arc welding to the substrate 40 mounted to the drum 13, as will be described in more detail hereinbelow.

Additionally, welding wire feed is required to be uninterrupted, highly accurate and consistent during the arc welding operation. A wire feed mechanism 27 consists of drive rollers which ensure that the wire (not shown) does not slip and is fed positively through the welding gun 23 at all times during the welding operation and includes a sensor (also not shown) for monitoring the welding wire being fed to each gun 23.

Drive elements, such as slewing rings 29, are provided for rotating the drum 13 about its axis 14 and associated with each drive element 29 is a rotational speed and angular positioning sensor 28.

In operation of the apparatus 10, a sheet substrate of a ferrous material and 2mm in thickness is applied around and secured to the cylindrical surface of the drum 13, as indicated above and shown at 40.

The material from which the drum 13 is made is preferably suitable to act as a heat sink for the subsequent arc welding operation.

The angular orientation of the frame 15, and hence that of the welding guns 23, with respect to the cylindrical substrate 40 is adjusted, so that the required acute angle between the guns 23 and the surface of the substrate 40 is achieved, while a constant stickout distance is maintained.

This procedure is carried out at 24 for Y-axis adjustment and at 25 for pivotal adjustment, so that, in combination with the angular orientation of the frame 15, the two welding guns 23 are at the desired acute operating angle transverse to the direction of rotation of the cylindrical substrate 40 and amount of stickout.

This procedure provides the desired set-up of the welding guns 23 in the directions of both the X and Y axes.

Once the arc has been struck between each welding gun 23 and the surface of the cylindrical substrate 40, welding wire is fed continuously from each welding gun 23, to provide a continuous weld bead upon the surface of the rotating substrate 40.

In this method, the substrate 40 could be low alloy steel or high alloy steel or iron or cast iron, or nickel, cobalt and copper based materials. The welding wire could also have different chemistry, iron-based, nickel and cobalt-based alloys being the most common type welding wire.

Simultaneously, the weld guns 23 are moved in the direction of the X axis along the member 21, so that the two weld beads 41 are applied across substantially the whole of the surface of the substrate 40.

In Figure 2, there is shown diagrammatically prior art apparatus in which the cylindrical substrate 50 upon the rotating drum 51 has the welding gun 52 located above the uppermost portion of the surface of the substrate 50.

In contrast, the embodiment of apparatus 10 shown in Figures 3 to 5, has the welding tip of each welding gun 23 located below that uppermost level of the surface of the rotating substrate 40.

This arrangement allows for a faster cladding process, in that the molten weld beads 41 applied to the rotating substrate 40 have enough time to solidify to a sufficient extent to prevent them from detaching themselves under gravity from the substrate 40 as they are rotated to the side of the apparatus 10 remote from the respective welding guns 23.

Thus, due to its comparatively high speed and comparatively low heat input, this arc welding cladding process allows the weld metal to cool down rapidly, with carbide distribution in the weld pools being extremely fine, thereby providing high cladding hardness and abrasion resistance.

As indicated above, this arc welding cladding method is dependent upon several operating parameters, namely:
1. Welding current which is proportional to the electrode/wire feed rate for a specific weld wire diameter, composition and stickout distance. A suitable, constant voltage power source, or any other appropriate power source, is used to melt the wire at a rate which maintains the preset output voltage. If other welding conditions are maintained constant, welding changes will have the following affects:
   increasing current will increase the wire deposition rate;
   increasing current will increase surface penetration of the substrate and the heat input;
   excessive current will produce convex weld beads with unacceptable bead appearance; and/or
   insufficient current will produce excessive spatter.
2. Arc voltage is the sum of the voltage drop through the welding cables, wire stickout, the arc, the substrate and the rotary earth, and any other components in series with the welding power source. If other welding conditions are maintained constant, changing the arc voltage will have the following affects:
   too high an arc voltage will result in a wide and irregularly shaped weld bead;
   too high an arc voltage may cause porosity in the cladding formed by the weld bead(s);
   too low an arc voltage may generate excessive spatter and poor weld bead performance;
   too low an arc voltage may result in a reduced penetration and lack of fusion; and/or
   too high an arc voltage may increase the heat input causing deformation of the substrate.
3. Stickout distance is the wire length between the welding tip and the substrate, which is resistance heated in proportion to its length. The stickout distance affects the arc energy, wire deposition rate and weld bead appearance and penetration.
4. Speed of travel, in this case rotational speed, influences the weld bead profile, heat input and penetration of the substrate surface.
5. Head and gun angles influence the weld bead profile.

Thus, and in order to maintain the desired weld bead, and hence cladding, profile, those parameters need to be adjusted from time to time.

Accordingly, the sensor 31 monitors the profile of the weld beads 41 and the resulting information is used to adjust accordingly one or more of the welding current, arc voltage, stickout distance, speed of rotation and head and gun angle.

The thin hardfaced plates manufactured by the above method and apparatus can be rolled to diameters as low as 100mm and two opposed ends of the plates can be joined, again using an arc welding techniques, to produce internally clad hardfaced pipes. It is also possible to clad thin substrate plates on both sides, to produce double-sided thin hardfaced plates.

## Claims

1. A method of manufacturing a hardfaced plate (1) by applying a cladding (3, 41) to a surface of a substrate (2, 40) by arc welding, the method comprising:
moving the substrate (2, 40) in a given direction relative to means for mounting a welding gun (23);
mounting the welding gun (23) relative to said substrate (2, 40) in a direction generally transverse to said given direction of movement of the substrate (2, 40);
feeding a continuous arc welding wire from the welding gun (23) to the surface of the substrate (2, 40), wherein the welding gun (23) feeds the welding wire to the surface of the substrate (2, 40) in the direction generally transverse to said given direction of movement of the substrate (2, 40); and **characterised in that** the substrate (2, 40) is applied around the cylindrical surface of a drum and is rotated in the given direction about a generally horizontal axis with respect to the welding gun (23).

2. A method according to claim 1, wherein the welding gun (23) is mounted at an acute angle to the surface of the substrate (2, 40) so as to clad said welding wire to said surface from one side of the given direction of movement of said substrate (2, 40).

3. A method according to claim 1 or claim 2, wherein the cladding (3, 41) applied to the surface of the substrate (2, 40) is in the form of a continuous weld bead (41) or a plurality of side-by-side weld beads (41).

4. A method according to claim 3, wherein it further comprises monitoring the profile(s) of the weld bead(s) (41).

5. A method according to claim 4, wherein said monitoring is carried out as part of a procedure to maintain a desired profile for the cladding (3, 41).

6. A method according to claim 4 or claim 5, wherein information from the monitoring is used to adjust at least one of a welding current, an arc voltage, speed of movement of the welding gun (23), speed of movement of the substrate (2, 40), a welding gun (23) angle or a stickout distance.

7. A method according to any preceding claim, wherein the method further comprises moving the welding gun (23) relative to said substrate (2, 40) in the direction generally transverse to said given direction of movement of the substrate (2, 40).

8. A method according to claim 7, wherein the method further comprises oscillating the welding wire transversely to the direction of movement of the substrate (2, 40) and/or the direction of movement of the welding gun (23).

9. A method according to claim 1, wherein further comprising feeding the welding wire to the surface of the rotating substrate (2, 40) at a level below an uppermost level of the rotating cylindrical substrate (2, 40).

## Patentansprüche

1. Verfahren zur Herstellung einer mit einer Hartschicht versehenen Platte (1) durch Aufbringen einer Bekleidung (3, 41) auf eine Oberfläche eines Substrats (2, 40) durch Lichtbogenschweißung, wobei das Verfahren Folgendes enthält:
Bewegen des Substrats (2, 40) in eine bestimmte Richtung relativ zum Mittel zur Befestigung einer Schweißpistole (23);
Befestigen der Schweißpistole (23) relativ zum Substrat (2, 40) in einer Richtung, die im Wesentlichen quer zur bestimmten Bewegungsrichtung des Substrats (2, 40) verläuft;
Zuführen eines kontinuierlichen Lichtbogenschweißdrahtes von der Schweißpistole (23) zur Oberfläche des Substrats (2, 40), wobei die Schweißpistole (23) den Schweißdraht auf die Oberfläche des Substrats (2, 40) in einer Richtung zuführt, die im Wesentlichen quer zur bestimmten Bewegungsrichtung des Substrats (2, 40) verläuft;
**dadurch gekennzeichnet, dass** das Substrat (2, 40) auf die zylindrische Oberfläche einer Trommel aufgebracht ist und in der bestimmten Richtung um eine im Wesentlichen horizontale Achse im Hinblick auf die Schweißpistole (23) gedreht wird.

2. Verfahren nach Anspruch 1, bei dem die Schweißpistole in einem spitzen Winkel zur Oberfläche des Substrats (2, 40) befestigt ist, um den Schweißdraht von einer Seite der bestimmten Richtung der Bewegung des Substrats (2, 40) auf die Oberfläche aufzubringen.

3. Verfahren nach Anspruch 1 oder 2, bei dem die Auflage (3, 41) auf die Oberfläche des Substrats (2, 40) in Form von kontinuierlichen Schweißperlen (41) oder in einer Vielzahl von nebeneinander liegenden Schweißperlen (41) erfolgt.

4. Verfahren nach Anspruch 3, welches ferner die Überwachung der Profile oder des Profils der Schweißperle oder der Schweißperlen (41) umfasst.

5. Verfahren nach Anspruch 4, bei dem die Überwachung als Teil eines Verfahrens ausgeführt wird, um ein gewünschtes Auflageprofil (3, 41) zu erhalten.

6. Verfahren nach Anspruch 4 oder 5, bei dem die Information aus der Überwachung verwendet wird, um wenigstens Schweißstrom, Bogenspannung, Geschwindigkeit der Bewegung der Schweißpistole (23), Geschwindigkeit der Bewegung des Substrats (2, 40), Winkel einer Schweißpistole (23) oder Ausgabeabstand einzustellen.

7. Verfahren nach einem der vorhergehenden Ansprüche, bei dem das Verfahren ferner die Bewegung der Schweißpistole (23) relativ zum Substrat (2, 40) in der Richtung umfasst, die im Wesentlichen quer zur bestimmten Bewegungsrichtung des Substrats (2, 40) verläuft.

8. Verfahren nach Anspruch 7, bei dem das Verfahren ferner das Verschwenken des Schweißdrahts quer zur Bewegungsrichtung des Substrats (2, 40) und/oder der Bewegungsrichtung der Schweißpistole (23) umfasst.

9. Verfahren nach Anspruch 1, welches ferner die Zufuhr des Schweißdrahts zur Oberfläche des drehenden Substrats (2, 40) in einer Ebene unterhalb der äußersten Ebene des drehenden zylindrischen Substrats (2, 40) umfasst.

## Revendications

1. Procédé pour fabriquer une plaque à face dure (1) en appliquant un revêtement (3, 41) sur une surface d'un substrat (2, 40) par soudage à l'arc, le procédé comprenant les étapes consistant à :
déplacer le substrat (2, 40) dans une direction donnée par rapport à des moyens pour monter un pistolet de soudage (23) ;
monter le pistolet de soudage (23) par rapport audit substrat (2, 40) dans une direction sensiblement transversale à ladite direction donnée de déplacement du substrat (2, 40) ;
alimenter un arc continu de fil à souder du pistolet de soudage (23) à la surface du substrat (2, 40), dans lequel le pistolet de soudage (23) alimente le fil à souder à la surface du substrat (2, 40) dans la direction sensiblement transversale à ladite direction donnée de déplacement du substrat (2, 40) ; et **caractérisé en ce que** le substrat (2, 40) est appliqué autour de la surface cylindrique d'un tambour et est entraîné en rotation dans la direction donnée autour d'un axe sensiblement horizontal par rapport au pistolet de soudage (23).

2. Procédé selon la revendication 1, dans lequel le pistolet de soudage (23) est monté selon un angle aigu sur la surface du substrat (2, 40) afin de revêtir avec ledit fil à souder ladite surface à partir d'un côté de la direction donnée du déplacement dudit substrat (2, 40).

3. Procédé selon la revendication 1 ou la revendication 2, dans lequel le revêtement (3, 41) appliqué sur la surface du substrat (2, 40) se présente sous la forme d'un cordon de soudure (41) continu ou d'une pluralité de cordons de soudure (41) côte à côte.

4. Procédé selon la revendication 3, dans lequel il est en outre prévu de surveiller le ou les profils du ou des cordons de soudure (41).

5. Procédé selon la revendication 4, dans lequel ladite surveillance est réalisée dans le cadre d'une procédure servant à maintenir un profil souhaité pour le revêtement (3, 41).

6. Procédé selon la revendication 4 ou la revendication 5, dans lequel l'information provenant de la surveillance est utilisée pour ajuster au moins l'un parmi un courant de soudage, une tension d'arc, la vitesse de déplacement du pistolet de soudage (23), la vitesse de déplacement du substrat (2, 40), un angle ou une distance de portée terminale du pistolet de soudage (23).

7. Procédé selon l'une quelconque des revendications précédentes, dans lequel le procédé comprend en outre l'étape consistant à déplacer le pistolet de soudage (23) par rapport audit substrat (2, 40) dans la direction sensiblement transversale à ladite direction de déplacement donnée du substrat (2, 40).

8. Procédé selon la revendication 7, dans lequel le procédé comprend en outre l'étape consistant à faire osciller le fil à souder de manière transversale par rapport à la direction de déplacement du substrat (2, 40) et/ou à la direction de déplacement du pistolet de soudage (23).

9. Procédé selon la revendication 1, comprenant en outre l'étape consistant à alimenter le fil à souder à la surface du substrat rotatif (2, 40) à un niveau situé au-dessous du niveau le plus haut du substrat cylindrique rotatif (2, 40).
